## Europäisches Patentamt
## European Patent Office
## Office européen des brevets

(19)

(11) Veröffentlichungsnummer: **0 213 324**
**B1**

(12)

# EUROPÄISCHE PATENTSCHRIFT

(45) Veröffentlichungstag der Patentschrift:
03.01.90

(21) Anmeldenummer: 86109169.2

(22) Anmeldetag: 04.07.86

(51) Int. Cl.⁵: **F 16 F 13/00**

(54) **Hydraulisch dämpfendes Lager.**

(30) Priorität: 31.08.85 DE 3531182

(43) Veröffentlichungstag der Anmeldung:
11.03.87 Patentblatt 87/11

(45) Bekanntmachung des Hinweises auf die Patenterteilung: 03.01.90 Patentblatt 90/01

(84) Benannte Vertragsstaaten:
DE FR GB IT NL SE

(56) Entgegenhaltungen:
EP–A– 0 071 698
DE–A– 2 743 043
DE–C– 2 841 505
DE–C– 3 142 023
FR–A– 2 555 688

(73) Patentinhaber: Dr.Ing.h.c. F. Porsche Aktiengesellschaft
Porschestrasse 42
D-7000 Stuttgart 40 (DE)

(72) Erfinder: von Broock, Ulrich, Dr. Dipl.-Ing.
Eberdinger Strasse 58
D-7251 Weissach (DE)

**Beschreibung**

Die Erfindung bezieht sich auf ein hydraulisch dämpfendes Lager nach dem Oberbegriff des Anspruchs 1.

Es sind hydraulisch dämpfende Lager aus der DE-C-28 41 505 bekannt, bei denen Drosselkanäle zur hydraulischen Verbindung von Kammern vorgesehen sind. Diese Kanäle bestehen aus zwischen einer Außenhülse und einer mit geringem Abstand zu dieser angeordneten Zwischenhülse vorgesehenen Nuten. Zwischen einer zentrisch angeordneten Innenhülse des Lagers und der Zwischenhülse erstrecken sich mehrere radial verlaufende elastische Wände, die sich in Axialrichtung erstreckende Kammern einschließen. Über stirnseitige Abdichtungen, die im Rahmen des Herstellungsverfahrens in Form von Angüssen oder durch nachträglich anzubringende Dichtscheiben vorgesehen werden, erfolgt ein flüssigkeitsdichter axialer Endabschluß.

Durch die sich bei Rotationsschwingungen abwechselnd verkleinernden und vergrößernden Flüssigkeitskammern wird das Medium über die Drosselkanäle umgepumpt, wodurch ein bestimmter Strömungswiderstand mit einer vorbestimmten Dämpfungskennung erzielt werden soll.

Aus der EP-A-71 698 ist ein hydraulisch gedämpftes Lager bekannt, das einteilig ausgebildet ist und bei dem die Außenhülsen mit den Innenhülsen über balgartige Wandungen miteinander verbunden sind.

Der Erfindung liegt die Aufgabe zugrunde, ein hydraulisch dämpfendes Lager zu schaffen, das einfach herzustellen ist, einen integrierten stirnseitigen flüssigkeitsdichten Abschluß aufweist und das Lager im Betrieb einen unterstützten Mediumfluß zwischen den Kammern gewährleistet.

Diese Aufgabe wird erfindungsgemäß durch die kennzeichnenden Merkmale des Anspruchs 1 gelöst. Weitere vorteilhafte Ausbildungen beinhalten die Unteransprüche.

Durch die Erfindung wird ein Lager geschaffen, das durch seine zweihälftige Ausbildung einen dichten stirnseitigen Abschluß beinhaltet und dabei einen nach innen gerichteten V-förmigen Ringwulst aufweisen kann, der nach außen hin auch im Belastungsfall keine Ausbeulung aufweist. Dieser derart gestaltete Ringwulst bildet im Hohlraum des Balges mit den Außenhülsen eine Kammer mit einem X-förmigen Querschnitt, der sich je nach Verformung im Belastungsfall zu einem H-förmigen Querschnitt ändert. Der Wulst ist vorzugsweise relativ dünnwandig ausgeführt, damit im Betrieb ein Zusammenfalten und eine hieraus resultierende Pumpwirkung erfolgen kann, so daß ein größeres Volumen zwischen den Kammern umpumpbar ist.

Der Drosselkanal wird im Gegensatz zu der DE-C 28 41 505 zwischen zwei Außenhülsen der Lagerhälften gebildet, wobei diese zum Teil ineinandergesteckt werden und die innenliegende Hülse im überlappten Bereich eine umlaufende Ausformung aufweist, die den eigentlichen Kanal bildet. Eine dichte Verbindung der Hülsen untereinander erfolgt über Sicken, Verpressungen, Verklebungen oder durch sonstige Verbindungen, die eine Dichtheit erzeugen.

Ein Ausführungsbeispiel der Erfindung ist in der Zeichnung dargestellt und wird im folgenden näher beschrieben.

Es zeigt

Fig. 1 einen Längsschnitt durch ein Lager, und

Fig. 2 einen Schnitt nach der Linie II-II der Fig. 1.

Das Lager 1 umfasst im wesentlichen zwei Lagerhälften 2, 3 mit jeweils einer Außenhülse 4, 5 und einer Innenhülse 6, 7. Zwischen diesen Hülsen 4, 6 und 5, 7 sind elastische Elemente mit Balgabschnitten 8, 9 vorgesehen, die mit den Hülsen durch Vulkanisieren verbunden sind und in der Trennebene 10 zusammengefügt werden.

Jeder Balgabschnitt 8, 9 weist gegenüberliegende Ringwülste 11, 11a und 12, 12a auf. Zwischen diesen und einerseits begrenzt von den Hülsen 6, 7 bzw. von einer abdeckenden elastischen Schicht des Lagers und andererseits von der Außenhülse 5 werden durch Wände 14 gegeneinander elastisch abgetrennte nierenförmige Kammern 13 und 15 gebildet. Diese Kammern 13 und 15 werden über einen möglichst langen Drosselkanal 16 miteinander verbunden, wobei dann die Öffnungen 17 und 18 jeweils entsprechend in den Kammern 13 und 15 angeordnet sind. Mit der Lage der Öffnungen 17 und 18 wird die Länge des Kanals 16 variiert und damit der Strömungswiderstand und eine hieraus resultierende Dämpfungskennung abgestimmt. Die gezeigte Lage der Öffnungen ist als Beispiel anzusehen, ebenso können die Öffnungen durch eine andere Position zu den Kammern aufweisen.

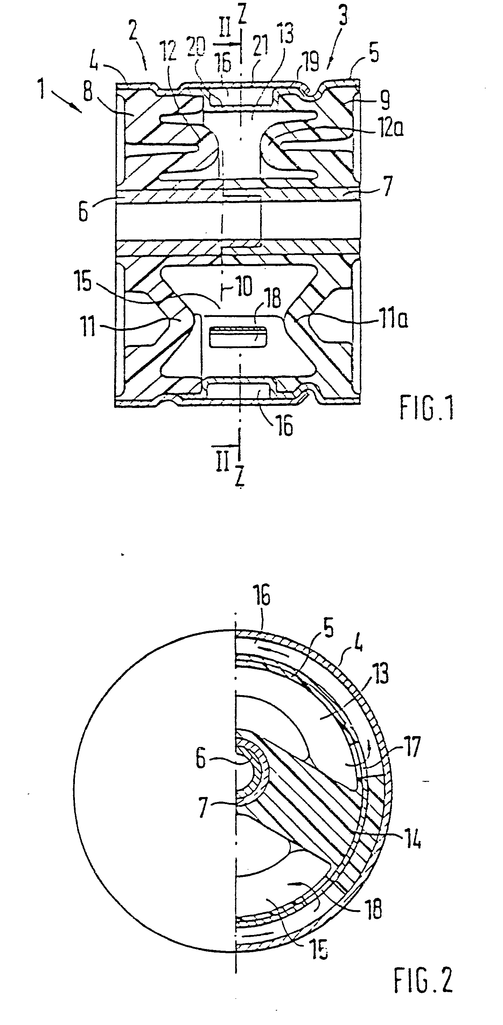

Der Ringwulst 11, 11a und 12, 12a ist im Querschnitt V-förmig ausgeführt und besteht aus einer relativ dünnen Wandung, die bei Radialbelastungen des Lagers faltbar ist (Fig. 1). Diese Faltbarkeit bewirkt eine sogenannte « Pumpwirkung », die zusätzlich zu dem durch die Verkleinerung der Kammern bewirkenden Mediumaustausch erzeugt wird.

Der Drosselkanal 16 ist als nutförmige Vertiefung 20 in der einen Außenhülse 5 der Lagerhälfte 3 vorgesehen und wird oberseitig von einem Wandteil 21 der weiteren Außenhülse 4 der Lagerhälfte 2 abgedeckt, so daß sich ein koaxial zur Innenbuchse 6, 7 verlaufender gekapselter Kanal 16 ergibt. Insbesondere weist die Außenhülse 4 eine Überlappung 19 auf, die ein Wandteil 21 aufweist. Der Kanal 16 ist vorzugsweise in einer Mittelebene Z-Z des Lagers 1 angeordnet, die gleichzeitig die Verbindungsebene der Lagerhälften 2, 3 darstellt.

Die Herstellung des Lagers 1 erfolgt in der Weise, daß die Lagerhälften 2, 3 in einer Form gegossen werden, wobei die Hülsen gleichzeitig mitverbunden sind. Durch die zweiteilige Herstellung des Lagers wird eine V-förmige Querschnittsausbildung des Wulstes möglich. Die Verbindung der beiden Lagerhälften 2, 3 erfolgt durch ein Ineinanderstecken der Innen- und Außenhülsen und Verbinden der beiden Außenhülsen 5 und 6. Ein besonderer axialer dichtender Abschluß ist nicht erforderlich, da das elastische Element während des Herstellungsverfahrens schon mit der Innen- und Außenhülse verbunden ist.

**Patentansprüche**

1. Hydraulisch dämpfendes Lager, das eine in einer Außenhülse (4, 5) angeordnete Innenhülse (6, 7) und ein dazwischen eingesetztes elastisches Element (8, 9) umfaßt, in welchem mehrere dämpfungsmittelgefüllte und hydraulisch über mindestens einen im Bereich der Außenhülse verlaufenden Drosselkanale (16) miteinander verbundene Kammern (13, 15) vorgesehen sind und diese Kammern sowie der Drosselkanal nach außen hin abgedichtet sind, dadurch gekennzeichnet, daß das Lager (1) zwei axial zusammensteckbare Lagerhälften (2, 3) umfaßt, wobei mit einer ersten Außenhülse (4) und einer ersten Innenhülse (6) eine erste elastische Balghälfte (8) und mit einer zweiten Außenhülse (5) und einer zweiten Innenhülse (7) eine zweite elastische Balghälfte (9) verbunden ist und die Balghälften (8 und 9) jeweils ins Innere der Kammern (13, 15) ragende und gegenüberstehende Ringwülste (11, 11a und 12, 12a) aufweisen, und der Drosselkanal (16) zwischen den sich überlappenden Bereichen (19 und 20) der Außenhülse (4 und 5) gebildet ist.

2. Lager nach Anspruch 1, dadurch gekennzeichnet, daß der in jede Kammer (13, 15) hineinragende Ringwulst (11, 11a und 12, 12a) im Querschnitt V-förmig ausgebildet ist und zur Erzielung einer wechselnden Pumpwirkung zwischen den beiden Kammern (13, 15) innerhalb der Kammern faltbar ausgeführt ist.

3. Lager nach den Ansprüchen 1 oder 2, dadurch gekennzeichnet, daß der Überströmkanal (16) eine weitestgehende Länge zwischen den beiden Kammern (13, 15) aufweist und sich vom Anfangsbereich der einen Kammer (13) bis zum Endbereich der anderen Kammer (15) erstreckt und diese beiden Kammern (13 und 15) über etwa in der Mittelebene (Z-Z) einmündende Öffnungen (17, 18) miteinander verbunden sind.

4. Lager nach Anspruch 1, dadurch gekennzeichnet, daß der gekapselte Überströmkanal (16) von einer kanalförmigen Vertiefung (20) in der zum Teil innenliegenden Außenhülse (5) und einem abdeckenden Wandteil (21) der weiteren Außenhülse (4) gebildet wird.

5. Lager nach einem oder mehreren der vorhergehenden Ansprüche, dadurch gekennzeichnet, daß der Überströmkanal (16) etwa in der Mittelebene (Z-Z) des Lagers angeordnet ist.

**Claims**

1. An hydraulically damping bearing comprising an internal sleeve (6, 7) arranged in an external sleeve (4, 5) and a resilient element (8, 9) which is inserted therebetween and in which are provided a plurality of chambers (13, 15) filled with damping agent and connected together hydraulically by at least one choke duct (16) extending in the region of the external sleeve, the said chambers and the choke duct being sealed off from the outside, characterized in that the bearing (1) comprises two axially assemblable halves (2, 3), a first resilient bellows half (8) being connected to a first external sleeve (4) and a first internal sleeve (6) and a second resilient bellows half (9) being connected to a second external sleeve (5) and a second internal sleeve (7) and the bellows halves (8 and 9) comprising opposite annular bulges (11, 11a and 12, 12a) projecting into the interior of the respective chambers (13, 15), and the choke duct (16) is formed between the overlapping regions (19 and 20) of the external sleeves (4 and 5).

2. A bearing according to Claim 1, characterized in that the annular bulge (11, 11a and 12, 12a) projecting into each chamber (13, 15) is V-shaped in cross-section and, in order to achieve an alternating pumping action between the two chambers (13, 15), is foldable inside the chambers.

3. A bearing according to Claim 1 or 2, characterized in that the overflow duct (16) has a length as great as possible between the two chambers (13, 15) and extends from the starting region of one chamber (13) as far as the end region of the other chamber (15) and the said two chambers (13 and 15) are connected to each other by way of apertures (17, 18) opening approximately in the median plane (Z-Z).

4. A bearing according to Claim 1, characterized in that the enclosed overflow duct (16) is formed by a duct-shaped depression (20) in the external sleeve (5) lying partly inside and by a covering wall portion (21) of the further external sleeve (4).

5. A bearing according to one or more of the preceding Claims characterized in that the overflow duct (16) is arranged approximately in the median plane (Z-Z) of the bearing.

**Revendications**

1. Coussinet amortisseur hydraulique comprenant un manchon intérieur (6, 7) disposé à l'intérieur d'un manchon extérieur (4, 5) et inséré entre les deux, un élément élastique (8, 9) dans lequel sont prévues plusieurs chambres (13, 15) remplies de liquide amortisseur et réunies hydrauliquement entre elles à travers au moins un canal d'étranglement (16) situé dans la zone du manchon extérieur avec lesdites chambres et le canal d'étranglement étant obturés d'une manière étanche par rapport à l'extérieur, caractérisé par le fait que le coussinet (1) comprend deux demi- coussinets (2, 3) emboîtables l'un dans l'autre, avec un premier demi-soufflet élastique (8) constitué par un premier manchon intérieur (4) et un premier manchon intérieur (6) et avec un deuxième demi-soufflet élastique (9) constitué par un deuxième manchon extérieur (5) et un deuxième manchon intérieur qui sont réunis entre eux, lesdits demi-soufflets (8 et 9) comportant chacun des renflements annulaires (11, 11a et 12, 12a) en regard les uns des autres et formant des surfaces en saillie à l'intérieur des chambres (13, 15), les zones (19 et 20) des manchons extérieurs (4 et 5) forment entre elles le canal d'étranglement (16).

2. Coussinet selon la revendication 1, caractérisé par le fait que chacun des renflements annulaires (11, 11a et 12, 12a) qui sont en saillie dans les chambres (13, 15) sont réalisés avec une section en V et que pour obtenir un effet de pompage alterné entre les deux chambres (13, 15) ils sont structurés de manière pouvoir se plier à l'intérieur desdites chambres.

3. Coussinet selon la revendication 1 ou 2, caractérisé par le fait que le canal d'étranglement (16) présente une longueur aussi grande que possible entre les deux chambres (13, 15) et qu'il s'étend entre la zone initiale de l'une des chambres (13) et la zone terminale de l'autre chambre (15) et que ces deux chambres (13 et 15) communiquent l'une avec l'autre à travers des orifices (17, 18) qui débouchent dans le voisinage du plan médian (Z-Z).

4. Coussinet selon la revendication 1, caractérisé par le fait que le canal d'étranglement (16) est constitué par une dépression en forme de gouttière (20) prévue dans la partie du manchon extérieur (5) qui est emboîtée dans le manchon extérieur (4) et par la surface intérieure de la partie de paroi (21) dudit manchon (4) qui la recouvre.

5. Coussinet selon une ou plusieurs des revendications ci-dessus, caractérisé par le fait que le canal d'étranglement (16) est disposé approximativement dans le plan médian (Z-Z) du coussinet.

EP 0 213 324 B1

FIG.1

FIG.2

1